# EUROPEAN PATENT APPLICATION

(11) **EP 2 639 687 A2**
(43) Date of publication of application: **18.09.2013**
(21) Application number: 13158543.2
(22) Date of filing: 11.03.2013
(51) Int. Cl.: G06F 3/0488

(54) **Display apparatus and control method thereof**

(30) Priority: 12.03.2012 KR 20120025168
(71) Applicant: Samsung Electronics Co., Ltd, Gyeonggi-do 443-742 (KR)
(72) Inventor: Hwang, Byung-jin, Gyeonggi-do (KR); Ahn, Jae-hong, Gyeonggi-do (KR); Ryu, Young-jun, Gyeonggi-do (KR); Lee, Dong-jin, Gyeonggi-do (KR); Lee, Hye-jeong, Seoul (KR)
(74) Representative: Hewett, Jonathan Michael Richard

(57) **Abstract**

A display apparatus including: a communication unit which communicates with a peripheral device; an image processing unit which processes an image signal received from the peripheral device; a touch panel display unit which displays an image based on the image signal and comprises a touch sensing unit which detects touch input of a user; and a controller which controls a first mode and a second mode to operate according to a setting of the user, the first mode controlling the image processing unit so that the image based on the image signal received from the peripheral device is displayed on the touch panel display unit and the second mode controlling the image processing unit and the touch panel display unit so that a graphic user interface (GUI) is displayed on the touch panel display unit and the touch input for controlling the peripheral device is received using the GUI.

## Description

The present invention relates to a display apparatus and a control method thereof, and more particularly to a display apparatus based on touch input and a control method thereof.

Display apparatuses based on touch input are widely used. Such apparatuses are smartphones, smart pads, and tablet PCs. Such display apparatuses may provide a variety of functions, e.g., playing multi-media contents, such as movies and music, offering a communication function, such as a telephone and Internet, and serving as an e-book or a camera.

Also, there is need for further development in technology to provide useful function by utilization of the touch input-based display apparatus.

Accordingly, one or more exemplary embodiments of the present invention provide a display apparatus based on touch input to provide useful functions and a control method thereof.

The foregoing and/or other aspects may be achieved by providing an exemplary embodiment directed to a display apparatus comprising: a communication unit which communicates with at least one peripheral device; an image processing unit which processes an image signal received from the at least one peripheral device; a touch panel display unit which displays an image based on the image signal and comprises a touch sensing unit which detects touch input of a user; and a controller which controls a first mode and a second mode to operate according to a setting of the user, the first mode controlling the image processing unit so that the image based on the image signal received from the at least one peripheral device is displayed on the touch panel display unit and the second mode controlling the image processing unit and the touch panel display unit so that a graphic user interface (GUI) is displayed on the touch panel display unit and the touch input for controlling the at least one peripheral device is received using the GUI.

The at least one peripheral device may comprise an imaging device which generates the image signal and an external display apparatus connected to the imaging device, wherein the external display apparatus displays a first image based on the image signal, and the controller controls the touch panel display unit to display a second image which is one of the same as and different from the first image based on the image signal in the first mode.

The GUI may comprise at least one from among a graphic for an on-screen keyboard and a graphic for an on-screen touch pad.

The GUI may comprise a selection window for selecting the first mode and the second mode, and the controller may select one of the first mode and the second mode according to the touch input of the user through the selection window and perform display control according to the selected mode.

The communication unit may comprise a first communication unit which communicates with the external display apparatus, and the controller controls to receive an image signal to display the second image from the external display apparatus through the first communication unit.

The communication unit may comprise a first communication unit which communicates with the imaging device, and the controller controls to receive an image signal to display the second image from the imaging device through the first communication unit.

The communication unit may comprise a first communication unit which communicates with the external display apparatus, and the controller transmits a control signal corresponding to the touch input to the imaging device through the external display apparatus.

The communication unit may comprise a first communication unit which communicates with the imaging device, and the controller transmits a control signal corresponding to the touch input to the imaging device.

The display apparatus may further comprise a case accommodating the communication unit, the image processing unit and the controller, exposing a display surface of the touch panel display unit, and including a coupling part. The coupling part may be formed on an outside of the case.

Another exemplary embodiment is directed to a control method of a display apparatus connected to at least one peripheral device, the at least one peripheral device comprising a touch panel display unit including a touch sensing unit which detects touch input of a user, the method comprising: determining an operation mode according to a setting of the user; displaying an image based on an image signal received from the at least one peripheral device on the touch panel display unit in a first mode determined according to the setting of the user; and performing display control of a graphic user interface (GUI) for receiving the touch input on the touch panel display unit to control the at least one peripheral device in a second mode determined according to the setting of the user.

The at least one peripheral device may comprise an imaging device which generates the image signal and an external display apparatus connected to the imaging device, and the displaying the image comprises displaying a second image which is one of the same as and different from a first image based on the image signal in the first mode.

The GUI may comprise at least one from among a graphic for an on-screen keyboard and a graphic for an on-screen touch pad.

The GUI may comprise a selection window for selecting the first mode and the second mode, the determining the operation mode may comprise selecting one of the first mode and the second mode according to the touch input of the user through the selection window, and the displaying the image and the performing the display control are performed according to the selected mode.

The control method may further comprise receiving an image signal to display the second image through the external display apparatus.

The control method may further comprise receiving an image signal to display the second image through the imaging device.

The control method may further comprise transmitting a control signal corresponding to the touch input to the imaging device.

The transmitting may comprise transmitting the control signal corresponding to the touch input to the imaging device through the external display apparatus.

Yet another exemplary embodiment is directed to a display apparatus comprising: a main display unit; a sub-display unit; a communication unit which communicates with at least one from among an external device and the main display unit; an image processing unit which processes an image signal received from the at least one from among the external device and the main display unit; and a controller which controls a first mode and a second mode to operate according to a setting, the first mode controlling the image processing unit so that the image based on the image signal received from the at least one from among the external device and the main display unit is displayed on the sub-display unit and the second mode controlling the image processing unit and the sub-display unit so that a graphic user interface (GUI) is displayed on the sub-display unit.

The sub-display unit may include a touch panel display unit which displays the image based on the image signal and a touch sensing unit which detects touch input of a user.

In accordance with exemplary embodiments described above, a display apparatus based on touch input provides useful functions.

The above and/or other aspects will become apparent and more readily appreciated from the following description of the exemplary embodiments, taken in conjunction with the accompanying drawings, in which:
FIG. 1 is a block diagram illustrating a display apparatus and a display system according to an exemplary embodiment.
FIG. 2 shows an illustrative case where a main display apparatus and a sub-display apparatus are disposed adjacent to each other.
FIG. 3 is a block diagram illustrating a configuration of a sub-display apparatus shown in FIG. 1.
FIGs. 4 to 7 are flowcharts showing illustrative control methods of the sub-display apparatus shown in FIG. 3.
FIG. 8 shows an illustrative example of an on-screen keyboard and an on-screen touch pad displayed by the sub-display apparatus shown in FIG. 1.
FIG. 9 is a flowchart showing another illustrative control method of the sub-display apparatus shown in FIG. 3.
FIG. 10 illustrates a coupling part of the sub-display apparatus of FIG. 1.

Below, exemplary embodiments will be described in detail with reference to accompanying drawings so as to be easily understood by a person having ordinary knowledge in the art. The present invention may be embodied in various forms without being limited to the exemplary embodiments set forth herein. Descriptions of well-known parts are omitted for clarity and conciseness, and like reference numerals refer to like elements throughout.

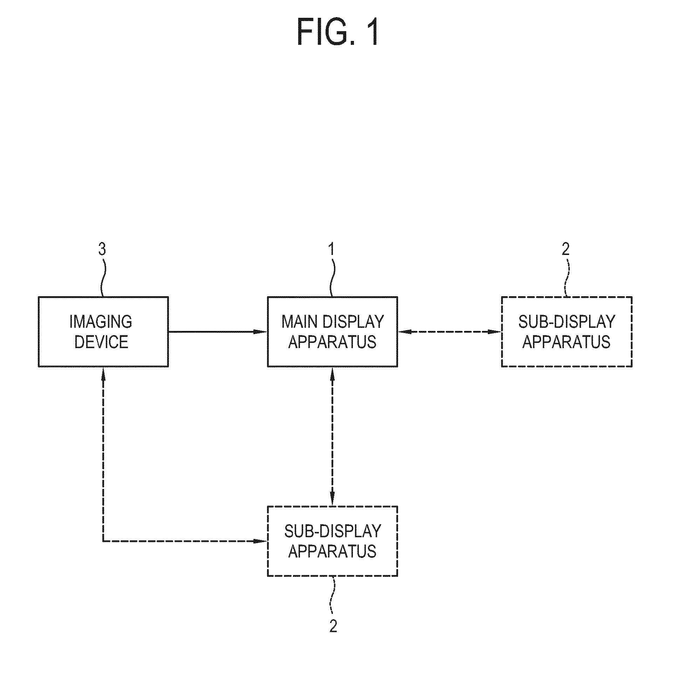

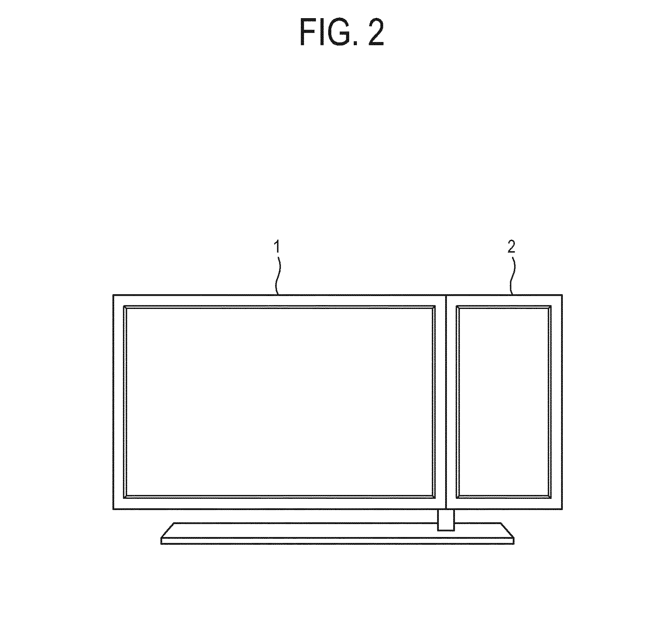

FIG. 1 is a block diagram illustrating a display apparatus according to an exemplary embodiment. The display apparatus 2 (hereinafter, also referred to as a "sub-display apparatus") according to the present exemplary embodiment may be used together with a main display apparatus 1. The sub-display apparatus 2 may be disposed adjacent to the main display apparatus 1 or separate from the main display apparatus 1. FIG. 2 shows an illustrative case where the main display apparatus 1 and the sub-display apparatus 2 are disposed adjacent to each other.

The main display apparatus 1 receives an image signal from an imaging device 3 and displays an image based on the signal. The imaging device may be a PC and provides an image signal to the main display apparatus 1 and/or the sub-display apparatus 2. The sub-display apparatus 2 communicates with the imaging device 3 and the main display apparatus 1 and receives an image signal from either of the imaging device 3 and the main display apparatus 1 to display an image. The sub-display apparatus 2 has a touch screen function and controls an image display of the main display apparatus 1 and the sub-display apparatus 2 based on touch input by a user. For example, if the sub-display apparatus 2 is disposed adjacent to the main display apparatus 1, the sub-display apparatus 2 serves as an auxiliary display apparatus of the main display apparatus 1. The sub-display apparatus 2 constitutes a dual screen along with the main display apparatus 1, provides information on an image of the main display apparatus 1 (hereinafter, also referred to as a "first image"), displays an auxiliary image of the first image (hereinafter, also referred to as a "second image"), or provides a graphic user interface (GUI) menu about the first image to control a display of the first image according to input by a user using the GUI menu. The second image may be the same as or different from the first image. Alternatively, the first image and the second image may be part of a single image.

If the sub-display apparatus 2 is used separately from the main display apparatus 1, the sub-display apparatus 2 provides a GUI, such as an on-screen keyboard and an on-screen touch pad, to function as an input device of the imaging device 3. The main display apparatus 1 and the imaging device 3 are illustrative peripheral devices for the sub-display apparatus 2. Also, the main display apparatus 1 is an illustrative external display apparatus for the sub-display apparatus 2.

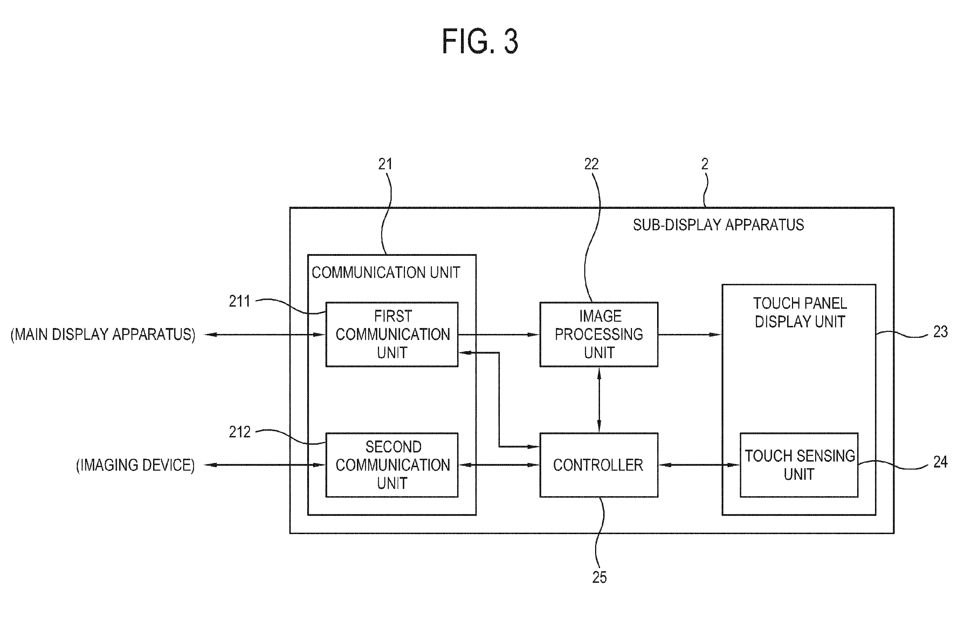

FIG. 3 is a block diagram illustrating a configuration of the sub-display apparatus 2 shown in FIG. 1. The sub-display apparatus 2 includes a communication unit 21, an image processing unit 22, a touch panel display unit 23, and a controller 25. The communication unit 21 communicates with the main display apparatus 1 and the imaging device 3. The communication unit 21 may include a first communication unit 211 communicating with the main display apparatus 1 and a second communication unit 212 communicating with the imaging device 3. The first communication unit 211 may communicate with the main display apparatus 1 if the sub-display apparatus 2 is disposed adjacent to the main display apparatus 1. The first communication unit 211 may communicate with the main display apparatus in a communication mode, such as via USB. The second communication unit 212 may communicate with the imaging device 3 in a wireless communication mode, such as via Wi-Fi. The second communication unit 212 may communicate with the imaging device 3 not only when the sub-display apparatus 2 is adjacent to the main display apparatus 1 but also when the sub-display apparatus 2 is separate from the main display apparatus 1.

The image processing unit 22 performs processing to display a second image based on an image signal received through the communication unit 21. Further, the display apparatus 22 performs processing to display a GUI.

The touch panel display unit 23 displays a second image and/or GUI processed by the image processing unit 22. The touch panel display unit 23 includes a display element, such as an LCD and OLED.

A touch input unit 24 includes a touch sensing unit 24 detecting touch input of a user on the touch panel display unit 23 and transmits the detected touch input of the user to the controller 25.

The controller 25 controls the sub-display apparatus 2. The controller 25 controls a display of at least one from among a first image of the main display apparatus 1 and a second image of the touch panel display unit 23 according to touch input of the user. The controller 25 may include a nonvolatile memory (not shown) storing a control program enabling a control operation, a volatile memory loading at least part of a stored control program, and/or a microprocessor implementing a loaded control program.

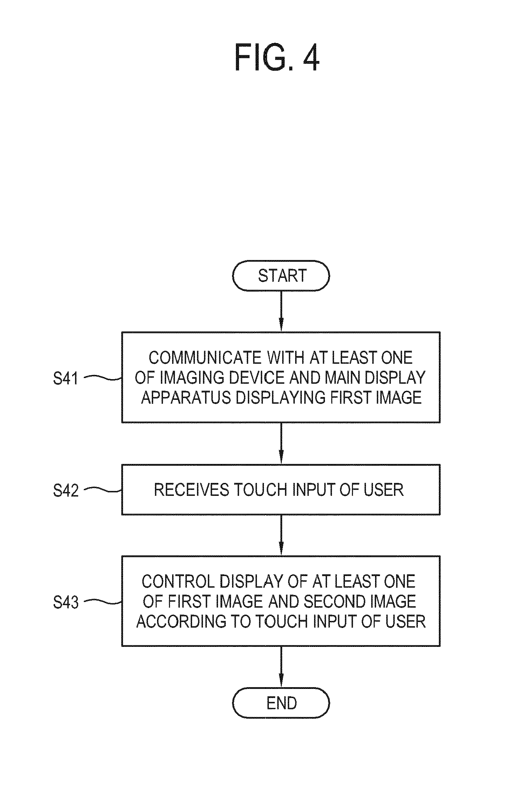

FIG. 4 is a flowchart showing an illustrative control method of the sub-display apparatus 2 shown in FIG. 3. At operation S41, the sub-display apparatus 2 communicates with at least one from among the imaging device 3 and the main display apparatus 1. At operation S42, the sub-display apparatus 2 receives touch input of a user. At operation S43, the sub-display apparatus 2 controls a display of at least one from among the first image of the main display apparatus 1 and the second image of the sub-display apparatus 2 according to the touch input of the user.

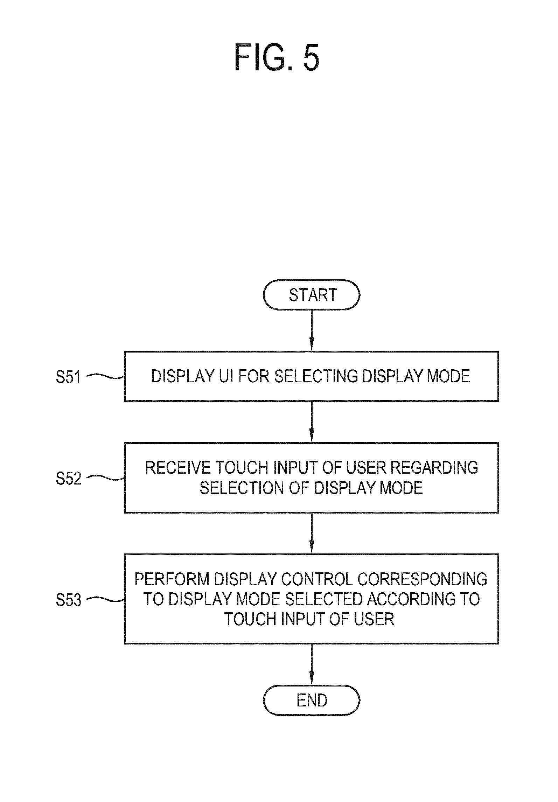

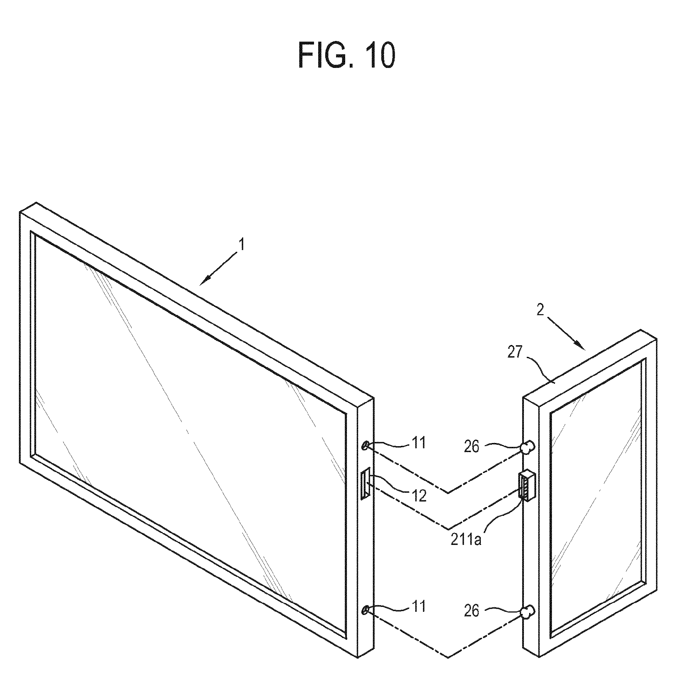

FIG. 5 is a flowchart showing an illustrative control method of the sub-display apparatus 2 shown in FIG. 3. The present exemplary embodiment illustrates that the sub-display apparatus 2 is disposed adjacent to the main display apparatus 1, as shown in FIG. 2. In this case, the sub-display apparatus 2 may be physically mounted on the main display apparatus 1. The sub-display apparatus 2 may further include a coupling part 26 of FIG. 10 for mounting the sub-display apparatus 2 on the main display apparatus 1. As shown in FIG. 10, the sub-display apparatus 2 may further include a case 27 which accommodates the communication unit 21, the image processing unit 22 and the controller 25, exposes a display surface of the touch panel display unit 23, and includes the coupling part 26 formed on an outside thereof. The coupling part 26 of the sub-display apparatus 2 is combined with a coupling part 11 provided on the main display apparatus 1, so that the sub-display apparatus 2 is supported by the main display apparatus 1. The coupling part 26 shown in FIG. 10 is merely an illustrative example, and various shapes of coupling tools for mounting the sub-display apparatus 2 on the main display apparatus 1 may be applied to the present embodiment. For example, a coupling part (not shown) of the sub-display apparatus 2 may not directly combined with the main display apparatus 1 but may be combined with a support (not shown) supporting the main display apparatus 1 to be supported.

The first communication unit 211 includes a connector 211a and may be combined with a connector 12 of the main display apparatus 1 when the sub-display apparatus 2 is combined with the main display apparatus 1. The connector 211a shown in FIG. 10 is merely an illustrative example, and various shapes of connectors to enable communication between the sub-display apparatus 2 and the main display apparatus 1 may be employed in the present exemplary embodiment. For example, unlike a connector projecting as shown in FIG. 10, the first communication unit 211 may have an internal connector (not shown, refer to 12) formed on a surface of the case 27 other than a surface facing the main display apparatus 1, e.g., a rear surface, so that the connector of the sub-display apparatus 2 is connected to the connector 12 of the main display apparatus 1 using a cable (not shown).

When the sub-display apparatus 2 is mounted on the main display apparatus 1, the first communication unit 211 of the sub-display apparatus 2 is connected to a communication unit (not shown) of the main display apparatus 1.

If the sub-display apparatus 2 is connected to the main display apparatus 1, the sub-display apparatus 2 displays a GUI for selecting a display mode at operation S51. In the present exemplary embodiment, the display mode includes a dual screen mode, an interaction mode, a remote control mode, or the like. The dual screen mode and the interaction mode are an illustrative first mode and an illustrative second mode, respectively. The user may select a desired mode by touching an icon provided on the GUI. At operation S52, the sub-display apparatus 2 receives touch input of a user regarding selection of the display mode. At operation S53, the sub-display apparatus 2 controls a display corresponding to the display mode selected according to the touch input of the user.

For example, if the dual screen mode is selected, the sub-display apparatus 2 performs control so that the first image of the main display apparatus 1 and the second image of the sub-display apparatus 2 form a dual screen. The sub-display apparatus 2 transmits a control signal indicating that the dual screen mode is selected to the imaging device 3. The sub-display apparatus 2 transmits the control signal directly to the imaging device 3 using the second communication unit 212, or transmits the control signal to the imaging device 3 via the main display apparatus 1 using the first communication unit 211. When receiving the control signal indicating that the dual screen mode is selected from the sub-display apparatus 2, the imaging device 3 transmits an image signal of the first image to constitute the dual screen to the main display apparatus 1 and an image signal of the second image to constitute the dual screen to the sub-display apparatus 2. The sub-display apparatus 2 may receive the image signal of the second image directly from the imaging device 3 using the second communication 212, or from the imaging device 3 via the main display apparatus 1 using the first communication unit 211. The main display apparatus 1 and the sub-display apparatus 2 display the first image and the second image based on the received image signals, respectively, thereby providing the dual screen.

Alternatively, if the interaction mode is selected, the sub-display apparatus 2 may control a display of the first image of the main display apparatus 1 and the second image of the touch panel display unit 23 through interaction with the main display apparatus 1. In detail, the control method will be described with reference to video telephony as an illustrative example of the interaction mode. An application providing a video telephony function may be implemented at either of the sub-display apparatus 2, the main display apparatus 1, and the imaging device 3. To smoothly provide the function of the application, the sub-display apparatus 2, the main display apparatus 1, and the imaging device 3 communicate with one another and transmit and receive necessary information, data, and controls signals.

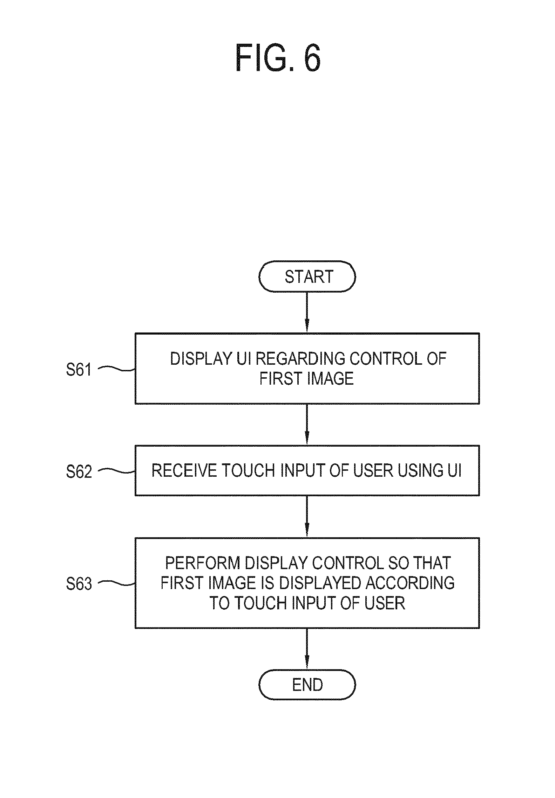

FIG. 6 is a flowchart showing an illustrative control method of the sub-display apparatus 2. At operation S61, the sub-display apparatus 2 may display a GUI regarding control of the first image of the main display apparatus 1. For example, the sub-display apparatus 2 may display a GUI (not shown) including a menu for selecting a person to speak to in a video telephony service, starting a phone call, or the like. A user may select a particular person and make a phone call using the GUI provided on the sub-display apparatus 2. At operation S62, the sub-display apparatus 2 receives touch input of the user using the GUI. At operation S63, the sub-display apparatus 2 may perform display control so that the first image is displayed according to the touch input of the user. For example, the sub-display apparatus 2 may determine a person to speak to in the video telephony service according to the touch input of the user. The sub-display apparatus 2 may inform the main display apparatus 1 of information on the determined person in the video telephony service. The main display apparatus 1 may display a figure of the person to speak to in the video telephony service selected by the user as the first image. Alternatively, the sub-display apparatus 2 receives an image including the figure of the person and transmits the image to the main display apparatus 1.

The sub-display apparatus 2 may display a figure of the user as the second image. The sub-display apparatus 2 may further include a camera (not shown) taking a picture of the figure of the user or receive an image of the figure of the user from the main display apparatus 1 or the imaging device 3.

Further, the control method will be described with reference to a video playing function as another illustrative example of the inaction mode. The sub-display apparatus 2 may display a GUI (not shown) including a menu for selecting a video to be played, playing the video, rewinding the video, or the like. The user selects a desired video by touching the GUI provided on the sub-display apparatus 2 and starts playing the video. The main display apparatus 1 displays the video selected by the user as the first image. The sub-display apparatus 2 may further display related information on the video. Alternatively, the main display apparatus 1 displays an image of a TV program, and the sub-display apparatus 2 provides related information and/or a GUI about the TV program.

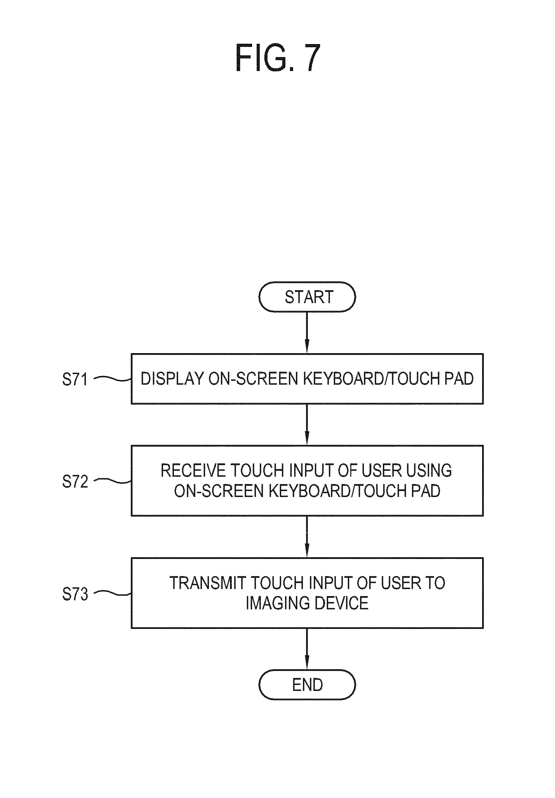

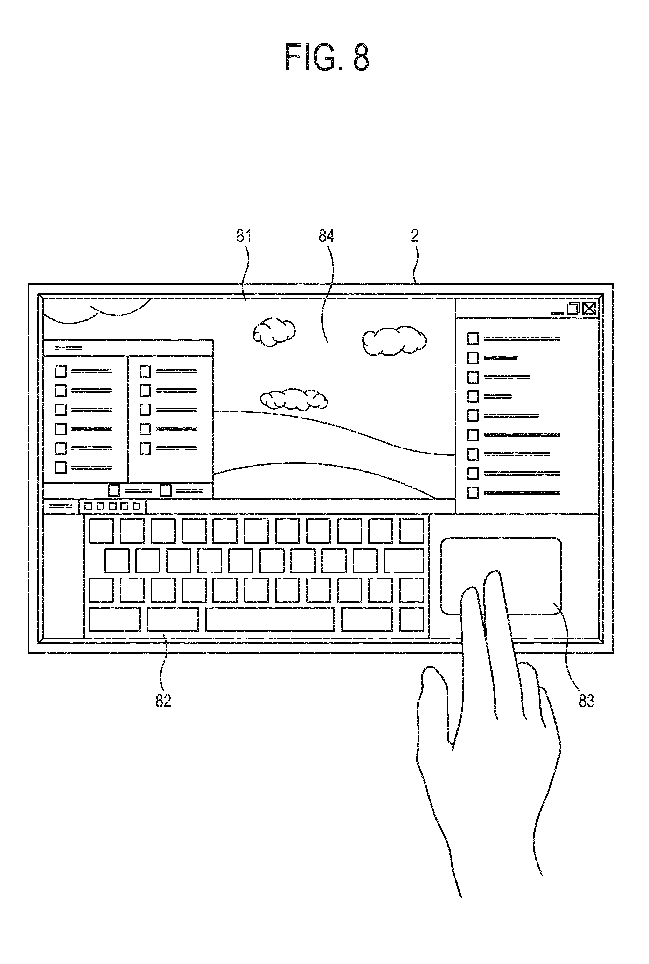

Alternatively, the control method will be described with reference to a case where a remote control mode is selected. In the present exemplary embodiment, the main display apparatus 1 is disposed separate from the sub-display apparatus 2. FIG. 7 is a flowchart showing an illustrative control method of the sub-display apparatus 2. At operation S71, the sub-display apparatus 2 displays an on-screen keyboard and/or an on-screen touch pad on the touch panel display unit 23. FIG. 8 shows an illustrative example of the on-screen keyboard and the on-screen touch pad displayed by the sub-display apparatus 2. The sub-display apparatus 2 displays a GUI including the on-screen keyboard 82 and the on-screen touch pad 83 on a screen 81 of the touch panel display unit 23. The user may make various types of input by touching the on-screen keyboard 82 and the on-screen touch pad 83. Meanwhile, the screen 81 may further display an image 84. The image 84 may be displayed by processing an image signal received from a peripheral device, such as the imaging device 3 or the display apparatus 1. The GUI of the on-screen keyboard 82 and the on-screen touch pad 83 may be displayed, divided from or overlapped with the image 84. At operation S72, the sub-display apparatus 2 receives touch input of the user using the on-screen keyboard 82 and the on-screen touch pad 83. At operation S73, the sub-display apparatus 2 transmits a control signal corresponding to the touch input of the user to the imaging device 3. The imaging device 3 performs an operation according to the transmitted touch input of the user. The sub-display apparatus 2 may receive an image output from the imaging device 3 and display the image on the screen 81. In this way, the user remotely controls the imaging device 3 using the sub-display apparatus 2, thereby promoting a variety of functions and user's convenience.

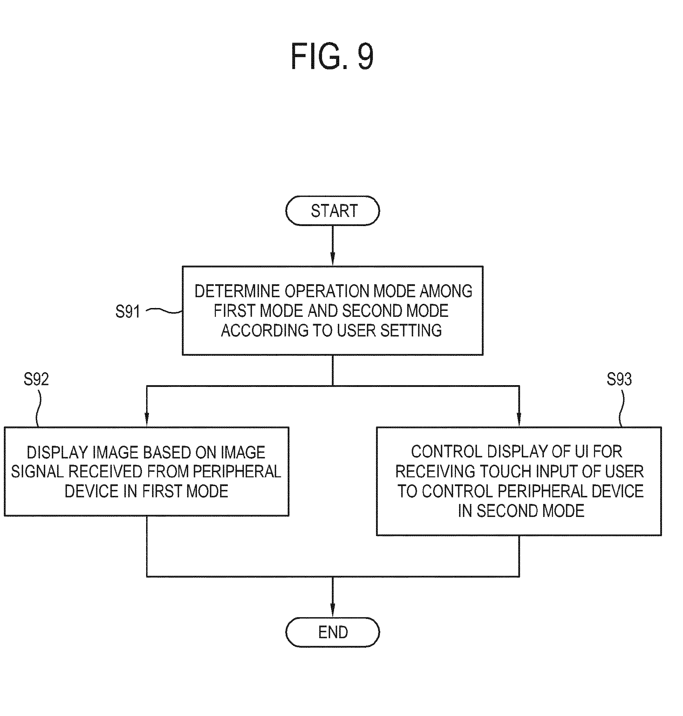

FIG. 9 is a flowchart showing an illustrative control method of the sub-display apparatus 2 shown in FIG. 3. At operation S91, the sub-display apparatus 2 determines an operation mode among a first mode and a second mode according to settings by a user. Settings by the user include a setting made by user input received in real time through the touch sensing unit 24 in use of the sub-display apparatus 2 or a setting made by setting information stored in a memory (not shown) of the sub-display apparatus 2. If the first mode is selected, the sub-display apparatus 2 displays an image based on an image signal received from a peripheral device, such as the main display apparatus 1 or the imaging device 3, at operation S92. For example, in a dual screen mode, the sub-display apparatus 2 displays a second image constituting a dual screen along with a first image displayed on the main display apparatus. In the first mode, the sub-display apparatus 2 may make a request directly to the imaging device or to the imaging device 3 via the main display apparatus 1 that the imaging device 3 transmits an image signal including the second image constituting the dual screen to the sub-display apparatus 2. In the second mode, for example, when the interaction mode is selected, the sub-display apparatus 2 controls a display of a GUI for receiving touch input of a user in order to control the peripheral device, such as the main display apparatus 1 or the imaging device 3.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a communication unit which communicates with at least one peripheral device;
an image processing unit which processes an image signal received from the at least one peripheral device;
a touch panel display unit which displays an image based on the image signal and comprises a touch sensing unit which detects touch input of a user; and
a controller which controls a first mode and a second mode to operate according to a setting, the first mode controlling the image processing unit so that the image based on the image signal received from the at least one peripheral device is displayed on the touch panel display unit and the second mode controlling the image processing unit and the touch panel display unit so that a graphic user interface (GUI) is displayed on the touch panel display unit and the touch input for controlling the at least one peripheral device is received using the GUI.

2. The display apparatus of claim 1, wherein the at least one peripheral device comprises an imaging device which generates the image signal and an external display apparatus connected to the imaging device, the external display apparatus displays a first image based on the image signal, and the controller controls the touch panel display unit to display a second image which is one of the same as and different from the first image based on the image signal in the first mode.

3. The display apparatus of claim 1 or 2, wherein the GUI comprises at least one from among a graphic for an on-screen keyboard and a graphic for an on-screen touch pad.

4. The display apparatus of any one of claims 1 to 3, wherein the GUI comprises a selection window for selecting the first mode and the second mode, and the controller selects one of the first mode and the second mode according to the touch input of the user through the selection window and performs display control according to the selected mode.

5. The display apparatus of claim 2, wherein the communication unit comprises a first communication unit which communicates with the external display apparatus, and the controller controls to receive an image signal to display the second image from the external display apparatus through the first communication unit.

6. The display apparatus of claim 2, wherein the communication unit comprises a first communication unit which communicates with the imaging device, and the controller controls to receive an image signal to display the second image from the imaging device through the first communication unit.

7. The display apparatus of claim 2, wherein the communication unit comprises a first communication unit which communicates with the external display apparatus, and the controller transmits a control signal corresponding to the touch input to the imaging device through the external display apparatus.

8. The display apparatus of any one of claims 1 to 7, further comprising a case accommodating the communication unit, the image processing unit and the controller, exposing a display surface of the touch panel display unit, and including a coupling part.

9. A control method of a display apparatus connected to at least one peripheral device, the at least one peripheral device comprising a touch panel display unit including a touch sensing unit which detects touch input of a user, the method comprising:
determining an operation mode according to a setting of the user;
displaying an image based on an image signal received from the at least one peripheral device on the touch panel display unit in a first mode determined according to the setting of the user; and
performing display control of a graphic user interface (GUI) for receiving the touch input on the touch panel display unit to control the at least one peripheral device in a second mode determined according to the setting of the user.

10. The control method of claim 9, wherein the at least one peripheral device comprises an imaging device which generates the image signal and an external display apparatus connected to the imaging device, and the displaying the image comprises displaying a second image which is one of the same as and different from a first image based on the image signal in the first mode.

11. The control method of claim 9 or 10, wherein the GUI comprises at least one from among a graphic for an on-screen keyboard and a graphic for an on-screen touch pad.

12. The control method of any one of claims 9 to 11, wherein the GUI comprises a selection window for selecting the first mode and the second mode, the determining the operation mode comprises selecting one of the first mode and the second mode according to the touch input of the user through the selection window, and the displaying the image and the performing the display control are performed according to the selected mode.

13. The control method of claim 10, further comprising receiving an image signal to display the second image through the external display apparatus.

14. The control method of claim 10, further comprising receiving an image signal to display the second image through the imaging device.

15. The control method of claim 10, further comprising transmitting a control signal corresponding to the touch input to the imaging device.
